# EUROPÄISCHE PATENTSCHRIFT

(11) **EP 2 154 344 B1**
(45) Veröffentlichungstag und Bekanntmachung des Hinweises auf die Patenterteilung: **18.10.2017**
(21) Anmeldenummer: 09009540.7
(22) Anmeldetag: 23.07.2009
(51) Int. Cl.: F01N 3/023, F01N 3/025, F01N 3/22, F01N 3/30, F01N 3/32, F02B 37/16, F02B 37/18, F01N 13/00, F01N 3/20

(54) **Verfahren und Vorrichtung zur Regeneration eines im Abgastrakt einer Brennkraftmaschine angeordneten Partikelfilters**
Method and device for regenerating a particulate filter built into the exhaust gas tract of a combustion engine
Procédé et dispositif de régénération d'un filtre à particules agencé dans une ligne d'échappement d'un moteur à combustion interne

(30) Priorität: 12.08.2008 DE 102008038721
(43) Veröffentlichungstag der Anmeldung: 17.02.2010
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A1- 0 715 061
- EP-A2- 1 243 767
- KR-A- 20050 070 611
- US-A1- 2004 013 579
- US-A1- 2005 000 209

## Beschreibung

Die Erfindung betrifft ein Verfahren zur Regeneration eines im Abgastrakt einer Brennkraftmaschine angeordneten Partikelfilters nach dem Oberbegriff des Anspruchs 1 sowie eine Vorrichtung zur Regeneration eines im Abgastrakt einer Brennkraftmaschine angeordneten Partikelfilters nach dem Oberbegriff des Anspruchs 9.

Insbesondere betrifft die Erfindung ein Verfahren und eine Vorrichtung zur Regeneration von Partikelfiltern bei mit Luftüberschuss betriebenen Brennkraftmaschinen, wie Dieselmotoren oder Benzinmotoren mit Direkteinspritzung, wie sie beispielsweise in Kraftfahrzeugen oder Nutzfahrzeugen zum Einsatz gelangen.

Zur Minimierung der kohlenstoffhaltigen Feinstoffpartikel werden in Fahrzeugen üblicherweise sogenannte Partikelabscheider oder Partikelfilter eingesetzt. Eine typische Partikelabscheider-Anordnung in Fahrzeugen ist beispielsweise aus EP 10 727 65 A2 bekannt. Derartige Partikelabscheider unterscheiden sich von den Partikelfiltern dadurch, dass der Abgasstrom entlang der Abscheidestrukturen geführt wird, während bei Partikelfiltern das Abgas durch das Filtermedium hindurchströmen muss. Infolge dieses Unterschiedes neigen Partikelfilter zur Verstopfung, was den Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat.

Ein Beispiel für eine derartige Partikelfilter-Anordnung ist aus der EP 03 418 32 A2 bekannt.

Bei beiden vorstehend beschriebenen Anordnungen oxidiert jeweils ein stromauf des Partikelabscheiders bzw. des Partikelfilters angeordneter Oxidationskatalysator das Stickstoffmonoxid (NO) im Abgas mit Hilfe des ebenfalls enthaltenen Restsauerstoffes (O₂) zu Stickstoffdioxid (NO₂), und zwar gemäß folgender Gleichung:

2 NO + O₂ <-> 2 NO₂

Dabei ist zu beachten, dass das Gleichgewicht der obigen Reaktion bei hohen Temperaturen auf der Seite von NO liegt. Dies hat wiederum zur Folge, dass die erzielbaren NO₂-Anteile bei hohen Temperaturen aufgrund dieser thermodynamischen Begrenzung limitiert sind.

Das NO₂ setzt sich wiederum im Partikelfilter mit den kohlenstoffhaltigen Feinstpartikeln zu CO, CO₂, N₂ und NO um. Mit Hilfe des starken Oxidationsmittels NO₂ erfolgt somit eine kontinuierliche Entfernung der angelagerten Feinstoffpartikeln, so dass Regenerationszyklen, wie sie aufwendig bei anderen Anordnungen durchgeführt werden müssen, entfallen können. Man spricht in diesem Zusammenhang von einer passiven Regeneration, gemäß nachstehender Gleichungen:

2NO₂ + C -> 2NO + CO₂

NO₂ +C -> NO + CO

2C + 2NO₂ -> N₂ + 2CO₂

Neben NO₂ wird an den platinhaltigen NO-Oxidationskatalysatoren auch SO₃ aus im Kraftstoff- und/oder Motorenöl enthaltenem Schwefel gebildet. Das SO₃ und NO₂ kondensieren an kalten Stellen im Abgastrakt zu hochkorrosiver Schwefel- bzw. Salpetersäure, so dass die Abgasanlage bis zu den Partikelfiltern in Edelstahl ausgeführt werden muss, um eine Korrosion zu vermeiden.

Gelingt keine vollständige Oxidation des im Partikelfilter eingelagerten Kohlenstoffs mit Hilfe von NO₂, so steigen der Kohlenstoffanteil und damit der Abgasgegendruck stetig an. Um dies zu vermeiden, werden aktuell die Partikelfilter vermehrt mit einer katalytischen Beschichtung zur Oxidation von NO versehen (EP 03 418 32 A2). Dabei handelt es sich konkret um platinhaltige Katalysatoren. Der Nachteil dieses Verfahrens besteht jedoch darin, dass das am Partikelfilter gebildete NO₂ nur zur Oxidation von Partikeln dienen kann, die stromab der katalytisch aktiven Schicht zur NO-Oxidation abgeschieden wurden, das heißt somit innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der partikelfilterseitige NO-Oxidationskatalysator stromab des Filterkuchens, so dass die dort abgeschiedenen Rußpartikel nicht mit Hilfe von NO₂ aus dem, auf dem Partikelfilter aufgebrachten, NO-Oxidationskatalysator oxidiert werden können. Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters besteht darin, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß und Motorölasche einzulagern. Werden keramische Filtersubstrate eingesetzt, wird dies durch eine geringe Zelldichte von 50 cpsi bis 200 cpsi realisiert. Demgegenüber werden reine Katalysatoren üblicherweise mit Zelldichten von 400 cpsi bis 900 cpsi ausgeführt. Durch die Anhebung von 50 cpsi auf 900 cpsi ergibt sich eine Erhöhung der geometrischen Oberfläche von 1 m²/l auf 4 m²/l, wodurch erhebliche Umsatzsteigerungen an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, in dem der Eintrittsbereich des Partikelfilters als NO-Oxidationskatalysator ausgeführt ist, wie dies beispielsweise bei der DE 103 270 30 A1 beschrieben ist.

Obwohl durch diese Maßnahmen eine Rußoxidation wohl noch bis zu Temperaturen von 250°C möglich ist, gibt es dennoch Anwendungsfälle, in denen selbst diese Abgastemperaturen nicht erreicht werden und somit keine sichere Funktion des Partikelfilters sichergestellt werden kann. Dies tritt üblicherweise bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auf. Daher wird speziell in solchen Fällen eine zweite Möglichkeit der Partikelfilterregeneration angewendet, in dem die Abgastemperatur aktiv angehoben wird. Dies geschieht üblicherweise durch die Zugabe von Kohlenwasserstoffen (HC) stromauf von Katalysatoren, insbesondere HC-Oxidationskatalysatoren. Durch diese exotherme Reaktion bzw. Oxidation der Kohlenwasserstoffe an den Katalysatoren wird ein deutlicher Temperaturanstieg erreicht.

Gelingt dadurch eine Temperaturanhebung auf über 600°C, kommt es zu einer Oxidation bzw. zum Abbrennen des im Partikelfilter abgeschiedenen Kohlenstoffs mit Hilfe von Sauerstoff, gemäß nachstehender Gleichung:

C + O₂ -> CO₂

Allerdings besteht bei dieser sogenannten aktiven Filterregeneration die Gefahr, dass es durch das exotherme Abbrennen des kohlenstoffhaltigen Rußes zu einem starken Temperaturanstieg auf bis zu 1000°C und damit meist zur Schädigung des Partikelfilters und/oder nachgeschalteter Katalysatoren kommt. Da zudem die Temperaturerhöhung für mehrere Minuten aufrecht erhalten werden muss, um eine quantitative Oxidation der Rußpartikel sicherzustellen, ist der Bedarf an Kohlenwasserstoffen nicht unerheblich und verschlechtert den Wirkungsgrad der Brennkraftmaschine, da üblicherweise der Kraftstoff als Kohlenwasserstoffquelle verwendet wird.

Eine einfache Kombination dieser beiden Regenerationsarten, indem Kohlenwasserstoffe vor NO-Oxidationskatalysatoren zugegeben werden, ist nicht zielführend:

Durch die Temperaturanhebung auf über 600°C wird an den NO-Oxidationskatalysatoren auf Grund der thermodynamischen Begrenzung kaum mehr NO₂ gebildet. Zudem wird die Oxidation von NO durch die hohen Mengen an Kohlenwasserstoffen behindert, wodurch es zur starken Verminderung der NO₂-Bildung kommt. Dies führt dazu, dass die Partikel allein mit Hilfe von Sauerstoff oxidiert werden müssen, da in dieser Phase kein NO₂ zur Verfügung steht, was die Regenerationszeit verlängert.

Gleichzeitig sind die NO-Oxidationskatalysatoren gegenüber thermischer Schädigung weit weniger stabil, als Katalysatoren zur Kohlenwasserstoffoxidation, da es bei Temperaturen über 550°C zu einer irreversiblen Sinterung der Aktivkomponenten und damit einem Rückgang der NO-Oxidationsaktivität kommt.

Aus der KR 2005 0070611 A ist ein Abgastrakt einer Brennkraftmaschine bekannt, bei dem, in Abgas-Strömungsrichtung gesehen, stromauf eines Dieselpartikelfilters zwei Diesel-Oxidationskatalysatoren angeordnet sind. Ein erster Diesel-Oxidationskatalysator ist dabei einer Bypassleitung des Abgastrakts zugeordnet, mittels der der Abgasstrom an dem zweiten Diesel-Oxidationskatalysator vorbeigeleitet werden kann. Mittels eines an einem Verzweigungsbereich des Abgastrakts angeordneten Ventils kann hier zudem der Abgasstrom gesteuert werden, dergestalt, dass der Abgasstrom entweder über den ersten Diesel-Oxidationskatalysator oder über den zweiten Diesel-Oxidationskatalysator geleitet wird. Wird der Abgasstrom über den zweiten Diesel-Oxidationskatalysator geleitet, wird hier zudem Kraftstoff in den Abgastrakt eingeleitet.

Es ist Aufgabe der vorliegenden Erfindung, ein Verfahren und eine Vorrichtung zur Regeneration eines im Abgastrakt einer Brennkraftmaschine angeordneten Partikelfilters zur Verfügung zu stellen, mittels dem bzw. der auf baulich einfache und kompakte Weise eine funktionssichere und zuverlässige Partikelfilter-Regeneration erzielt werden kann.

Diese Aufgabe wird bezüglich des Verfahrens gelöst mit den Merkmalen des Anspruchs 1. Bezüglich der Vorrichtung wird diese Aufgabe gelöst mit den Merkmalen des Anspruchs 9. Vorteilhafte Ausgestaltungen hierzu sind jeweils Gegenstand der darauf rückbezogenen Unteransprüche.

Gemäß Patentanspruch 1 wird ein Verfahren zur Regeneration eines im Abgastrakt einer Brennkraftmaschine angeordneten Partikelfilters vorgeschlagen, mit wenigstens einem stromauf des Partikelfilters angeordneten NO-Oxidationskatalysator zur Oxidation von NO, insbesondere zu NO₂, der von einem Abgasstrom durchströmt wird, wobei wenigstens eine stromauf des Partikelfilters angeordnete, von einem weiteren Gasstrom durchströmte Heizeinrichtung, die insbesondere durch wenigstens einen Heizkatalysator gebildet ist, vorgesehen, mittels der der weitere Gasstrom erhitzt wird, wobei dieser erhitzte weitere Gasstrom dann stromauf des Partikelfilters mit einem von einem NO-Oxidationskatalysator kommenden, insbesondere mit NO₂ beladenem, Abgasstrom vermischt wird.

Das heißt, dass stromauf des Partikelfilters wenigstens ein NO-Oxidationskatalysator und wenigstens eine Heizeinrichtung, insbesondere ein Heizkatalysator, strömungstechnisch parallel zueinander angebracht und von einem Abgasstrom (NO-Oxidationskatalysator) bzw. von einem weiteren Gasstrom (Heizeinrichtung) durchströmt werden. Durch den erhitzten weiteren Gasstrom kann somit die Temperatur am Partikelfilter angehoben werden, wobei gleichzeitig noch hohe Mengen an NO₂ aus dem NO-Oxidationskatalysator zur Verfügung stehen, da im Bereich des NO-Oxidationskatalysators keine, sich zu ungunsten der NO₂-Bildung auswirkende Temperaturerhöhung erfolgt bzw. keine erhöhten Kohlenwasserstoffkonzentrationen, die zu einem Rückgang der NO-Oxidationsaktivität führen, vorliegen. Diese Temperaturerhöhung des Abgasstroms vor dem Partikelfilter findet somit in einem separaten Teil des Abgasstrangs, beabstandet vom NO-Oxidationskatalysator, statt, wobei dieser erhitzte Gasstrom dann stromab des NO-Oxidationskatalysators mit dem von diesem kommenden, mit NO₂ beladenen Abgasstrom vermischt wird, um die Abgastemperatur dieses Abgasstroms vor dem Partikelfilter zu erhöhen. Es wird hier somit eine funktionssichere, die jeweiligen Vorteile, ausnutzende und negative Wechselwirkungen vermeidende Kombination einer aktiven und einer passiven Regeneration eines Partikelfilters zur Verfügung gestellt.

Aufgrund der dadurch möglichen hohen Temperaturen bei gleichzeitiger Unterstützung der Rußoxidation durch das starke Oxidationsmittel NO₂ gelingt es, die Regenerationsdauer zu verkürzen und die Regenerationstemperatur auf ca. 400°C abzusenken. Dadurch wird die für die Temperaturerhöhung benötigte Kohlenwasserstoffmenge ebenso verringert wie die Gefahr eines unkontrollierbaren Temperaturanstieges und eine damit verbundene thermische Schädigung des Partikelfilters oder nachgeschalteter Katalysatoren.

Der weitere Gasstrom, über den die Temperaturanhebung realisiert wird, ist zum Beispiel von einem ladeluftseitigen Frischluftstrom oder von einem Ladeluftstrom stromab einer Einmündung einer Abgasrückführleitung einer externen Abgasrückführung abgezweigt. Damit kann auf einfache Weise sichergestellt werden, dass ausreichend Sauerstoff an der bevorzugt als Oxidationskatalysator ausgebildeten Heizeinrichtung zur Verfügung steht. Erfindungsgemäß ist der weitere Gasstrom zumindest durch einen vom Abgasstrang der Brennkraftmaschine abgezweigten Abgasstrom gebildet, der dann einen zweiten Abgasstrom ausbildet; auf diese erfindungsgemäße Variante wird nachfolgend abgestellt, wobei überall dort, wo dies technisch sinnvoll ist, der zweite Abgasstrom im weiteren Sinne auch mit einem z. B. ladeluftseitigen Frischluftstrom vermischt werden kann.

Grundsätzlich kann der zu erhitzende zweite Abgasstrom von jeder geeigneten Stelle der Abgasanlage abgezogen und im erhitzten Zustand dann dem ersten Abgasstrom beigemischt werden. Erfindungsgemäß ist ein Aufbau, bei dem die, zum NO-Oxidationskatalysator und zur Heizeinrichtung hinführende Abgasleitung, in eine vom ersten Abgasstrom durchströmte erste Zweigleitung, in der der NO-Oxidationskatalysator angeordnet ist und in eine, von einem zweiten Abgasstrom durchströmte, zweite Zweigleitung aufgeteilt ist, in der die Heizeinrichtung strömungstechnisch parallel geschaltet zum NO-Oxidationskatalysator, angeordnet ist. Diese beiden Zweigleitungen werden dann weiter erfindungsgemäß stromab des NO-Oxidationskatalysators und der Heizeinrichtung wieder zu einer zum Partikelfilter führenden Abgasleitung zusammengeführt. Besonders bevorzugt ist es in Verbindung mit einer derartigen konkreten Ausgestaltung, die zweite Zweigleitung als Bypassleitung auszuführen, die von der gleichzeitig die erste Zweigleitung ausbildenden und zum NO-Oxidationskatalysator hinführenden Abgasleitung abgezweigt ist. Eine derartige Bypassleitung trägt dem Umstand Rechnung, dass die Abgasmenge bzw. der Abgasmassenstrom, der durch die insbesondere durch einen Heizkatalysator gebildete Heizeinrichtung geführt wird, in der Regel geringer ist als der durch den NO-Oxidationskatalysator geführte erste Abgasstrom.

Die Heizeinrichtung ist gemäß einer besonders bevorzugten Ausgestaltung durch einen Heizkatalysator ausgebildet, insbesondere durch einen Oxidationskatalysator, mittels dem durch eine exotherme Reaktion bzw. Oxidation eine Temperaturerhöhung des Abgasstroms erzielt werden kann. Der Oxidationskatalysator ist bevorzugt ein HC-Oxidationskatalysator, mittels dem Kohlenwasserstoffe unter Freisetzung von Wärmeenergie oxidiert werden. Die Kohlenwasserstoffe werden dabei bevorzugt durch Kraftstoff gebildet. Grundsätzlich können die Kohlenwasserstoffe aber auch dadurch zur Verfügung gestellt werden, dass über eine späte Nacheinspritzung des Kraftstoffs in den Brennraum hohe Kohlenwasserstoffemissionen im Abgas generiert werden. Erfindungsgemäß ist es, die Zugabe der Kohlenwasserstoffe durch eine im Abgastrakt vorgesehene, separate Zudosiervorrichtung, beispielsweise eine Einspritzdüse oder dergleichen, zuzudosieren. Diese Zudosierung erfolgt dann stromauf des Heizkatalysators, indem dem zweiten Abgasstrom erfindungsgemäß zu vorgegebenen Zeiten eine vorgegebene Menge Kohlenwasserstoffe zudosiert bzw. zugedüst wird. Besonders bevorzugt ist eine entsprechend vorgegebener Steuer- und/oder Regelparameter erfolgende, zum Beispiel periodisch wiederkehrende, Zudosierung mit Hilfe einer elektronischen Kontrolleinheit.

Zum Zünden der zudosierten Kohlenwasserstoffe kann somit der zu erhitzende Abgasstrom über die bevorzugt als HC-Oxidationskatalysator ausgebildete Heizeinrichtung geführt werden, wodurch der Abgasstrom erhitzt wird. Die dadurch zu erzielende Heizleistung ist allerdings durch die vorhandene Sauerstoffmenge limitiert. Denn für den Fall, dass der Lambdawert den Wert 1 erreichen sollte, ist keine Oxidation der Kohlenwasserstoffe mehr möglich. Um dies zu vermeiden, wird vorgeschlagen, dem zu erhitzenden Abgasstrom, nach Erreichen einer bestimmten vorgegebenen Temperatur und/oder einer vorgegebenen Zeit und/oder bei Unterschreiten eines vorgegebenen Lambda- oder Sauerstoffwerts, Frischluft zuzuführen. Diese optionale Frischluftzuführung bewirkt ein Anheben des Lambdawertes und damit auch eine Anhebung der Heizleistung. Die Frischluft kann dabei generell ladeluftseitig abgezweigt werden, konkret zum Beispiel auch stromauf und/oder stromab einer Einmündung einer Abgasrückführleitung in eine Ladeluftleitung.

Üblicherweise ist der über den NO-Oxidationskatalysator geleitete Abgasstrom größer als der über den Heizkatalysator. Diese Aufteilung kann durch einfache strömungstechnische Maßnahmen erzielt werden, wie beispielsweise durch unterschiedliche hydraulische Durchmesser. Allerdings kann die Aufteilung auch aktiv, mit Hilfe von wenigstens einer variablen Drossel- und/oder Absperrvorrichtung erfolgen, die mit einer Steuer- und/oder Regeleinrichtung gekoppelt sein kann, mittels denen die Abgasmenge und/oder Abgasmasse des ersten und zweiten Abgasstroms entsprechend vorgegebener Mengen- und/oder Massestromparameter gesteuert vorgegeben oder eingeregelt werden kann. Die Drossel- und/oder Absperrvorrichtung kann beispielsweise durch eine Drossel- und/oder Absperrklappe oder aber auch durch ein Drossel- und/oder Absperrventil gebildet sein. Beispielsweise können diese Drossel- und/oder Absperrvorrichtungen im Verzweigungsbereich des ersten und zweiten Abgasstroms angeordnet sein und damit stromauf des NO-Oxidationskatalysators bzw. der Heizeinrichtung bzw. des Heizkatalysators. Insbesondere in Verbindung mit einer Art Bypassleitung, in der der Heizkatalysator bzw. die Heizeinrichtung angeordnet ist, also einer Parallelschaltung dieser Bauteile zum NO-Oxidationskatalysator, macht die Anordnung der mechanischen Mittel bzw. der Drossel- und/oder Absperrvorrichtung im Bereich einer den zweiten Abgasstrom führenden Abgasleitung Sinn.

Dies insbesondere auch dann, wenn der zweite Abgasstrom gemäß einer weiteren Ausführungsalternative stromauf eines Abgasturboladers abgezweigt wird. Denn ein Problem bei schwach belasteten Brennkraftmaschinen mit Abgasturbolader besteht darin, dass die Abgastemperaturen aufgrund der vom Turbolader geleiteten Verdichterarbeit noch tiefer sind als bei Brennkraftmaschinen ohne Abgasturboaufladung. Dies kann dazu führen, dass die Anspringtemperatur des zum Beispiel HC-Oxidationskatalysators als Heizkatalysator nicht erreicht und damit eine Eindüsung von Kohlenwasserstoffen unmöglich wird. Dieses Problem wird beim Einsatz einer zweistufigen Aufladung und/oder hohen Abgasrückführungsraten noch verstärkt. In diesem Fall bietet es sich dann an, dem über den zum Beispiel HC-Oxidationskatalysator als Heizkatalysator geleiteten Abgasstrom stromauf der Abgasturbine zu entnehmen und stromab der NO-Oxidationskatalysatoren wieder in erfindungsgemäßer Weise dem Abgasstrom zuzuführen. Dadurch liegt dann der zum Beispiel HC-Oxidationskatalysator als Heizkatalysator auf einem deutlich höheren Temperaturniveau, was eine Oxidation der eingedüsten Kohlenwasserstoffe auch bei den oben angesprochenen Problemfällen erlaubt. Da der Wirkungsgrad der Ladegruppe durch das Abblasen über den zum Beispiel HC-Oxidationskatalysator verschlechtert wird, sollte bei dieser Anordnung ein ansteuerbares Drossel- und/oder Absperrelement im stromauf der Turbine entnommenen Abgasstrom vorgesehen werden. Dadurch kann der Teilstrom im Nichtregenerationsbetrieb gedrosselt oder ganz abgeschaltet werden. Wird ein Waste-Gate zum Schutz des Turboladers und/oder der Brennkraftmaschine benötigt, bietet es sich an, den Teilstrom und die Drossel- oder Absperrvorrichtungen gleichzeitig auch als Waste-Gate zu verwenden.

Die Heizeinrichtung, insbesondere der Heizkatalysator, kann grundsätzlich außerhalb des Abgastraktes angeordnet werden, das heißt so, dass dieser nicht vom Abgas umströmt wird. Dies führt allerdings relativ schnell zu einer Auskühlung dieser Heizeinrichtung, insbesondere des Heizkatalysators. Sinnvoller ist es daher, die Heizeinrichtung, insbesondere den Heizkatalysator, so im Abgastrakt anzuordnen, dass er vom Abgas umströmt wird, wodurch die Wärmeverluste am Heizkatalysator verringert werden. Eine besonders platzsparende Anordnung besteht darin, die Heizeinrichtung, insbesondere den Heizkatalysator, durch den NO-Oxidationskatalysator wenigstens teilweise bzw. bereichsweise zu umgeben bzw. zu umschließen. Auch die Anbringung in einem gemeinsamen Gehäuse stellt eine sinnvolle Variante dar.

Um das System weiter zu verbessern, ist es weiterhin möglich, den bevorzugt als HC-Oxidationskatalysator ausgebildeten Heizkatalysator zusätzlich mit einer NO-Oxidationsaktivität zu versehen, wodurch die NO₂-Anteile im NichtRegenerationsbetrieb angehoben und damit die Oxidation der Partikel mit Hilfe der passiven Regeneration verbessert werden. Dadurch gelingt es, die Intervalle zwischen den aktiven Temperaturanhebungen zu verlängern können. Allerdings ist darauf zu achten, dass der Heizkatalysator thermisch stabiler ausgeführt sein muss als der reine NO-Oxidationskatalysator. Dies hat üblicherweise eine geringere NO-Oxidationsaktivität im Vergleich zu den reinen NO-Oxidationskatalysatoren zur Folge, wie dies bereits zuvor erwähnt worden ist.

Um insbesondere beim Einsatz von HC-Oxidationskatalysatoren als Heizkatalysatoren hohe Kohlenwasserstoffkonzentrationen stromab des Partikelfilters zu vermeiden, kann dieser mit einem Katalysator zur Oxidation von Kohlenwasserstoffen versehen werden. Auch ein stromauf- und/oder stromab des Partikelfilters angebrachter bzw. angeordneter Katalysator mit Kohlenwasserstoffoxidationsaktivität ist denkbar.

Als Aktivkomponenten kommen sowohl für die NO- als auch für die HC-Oxidationskatalysatoren Metalle der Platinmetallgruppe in Frage, allerdings unterscheidet sich deren Zusammensetzung: Um die thermische Stabilität der HC-Oxidationskatalysatoren zu verbessern, liegt zum Beispiel deren Palladiumanteil höher als der der NO-Oxidationskatalysatoren. Für die HC-Oxidationskatalysatoren kommt grundsätzlich als Aktivelement auch Cer in Frage.

Die Aktivität beider Katalysatortypen kann zum Beispiel durch den Einsatz von Zeolithen zusätzlich erhöht werden.

Des Weiteren können im Abgastrakt bzw. Abgasstrang zusätzlich Katalysatoren zur NOx-Reduktion vorgesehen sein, wie beispielsweise wenigstens ein NOx-Speicherkatalysator und/oder wenigstens ein SCR-Katalysator. Die NOx-Speicherkatalysatoren können stromab der Oxidationskatalysatoren und/oder stromab des Partikelfilters angeordnet sein. Für die NOx-Speicherkatalysatoren werden Platin- und/oder Barium und/oder Calcium als Aktivkomponenten bevorzugt eingesetzt. Demgegenüber ist für die SCR-Katalysatoren der Einsatz von wolframoxidstabilisiertem Vanadiumpentoxid, vorzugsweise auf Titandioxidbasis, oder Eisenzeolithe oder Kupferzeolithe oder Kobaltzeolithe sinnvoll.

Nachfolgend wird die Erfindung mit Hilfe einer Zeichnung lediglich beispielhaft näher erläutert.

Es zeigen:
- Fig. 1: schematisch eine erfindungsgemäße Vorrichtung zur Regenera-tion eines im Abgastrakt einer Brennkraftmaschine angeordneten Partikelfilters gemäß einer ersten Ausführungsform,
- Fig. 2: schematisch eine erfindungsgemäße Vorrichtung zur Regenera-tion eines im Abgastrakt einer Brennkraftmaschine angeordneten Partikelfilters gemäß einer zweiten Ausführungsform, und
- Fig. 3:: schematisch eine erfindungsgemäße Vorrichtung zur Regene-ration eines im Abgastrakt angeordneten Partikelfilters gemäß einer dritten Ausführungsform.

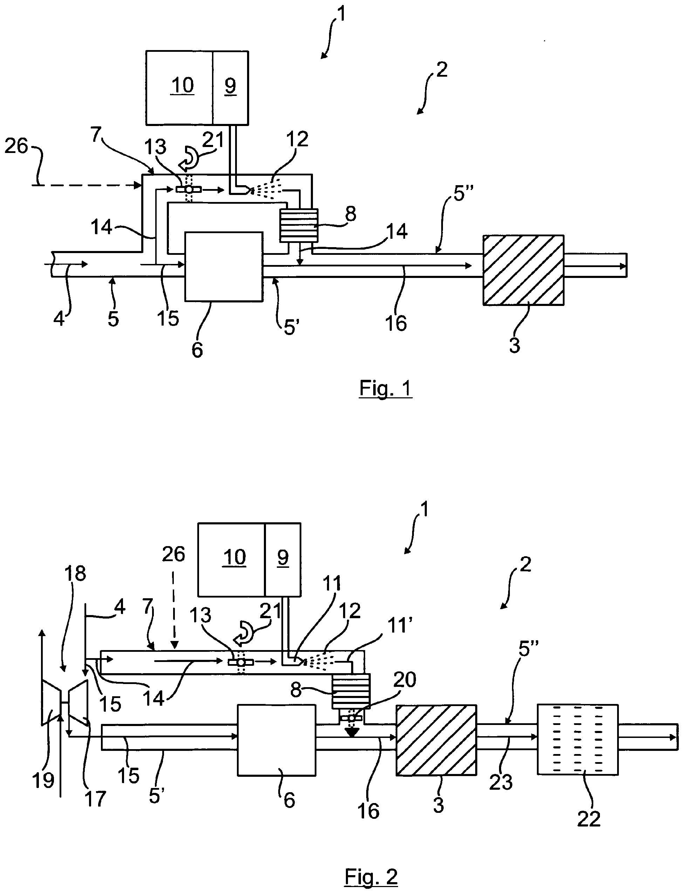

In Fig. 1 ist schematisch und lediglich beispielhaft eine erfindungsgemäße Regenerationsvorrichtung 1 für einen im Abgastrakt bzw. Abgasstrang 2 einer hier nicht dargestellten Brennkraftmaschine angeordneten Partikelfilter 3 gezeigt.

Konkret weist der Abgastrakt 2 hier eine Abgasleitung 5 auf. Stromauf des NO-Oxidationskatalysators 6 zweigt von der Abgasleitung 5 eine Bypassleitung 7 ab, in der ein HC-Oxidationskatalysator 8 angeordnet ist; in der nach der Abzweigstelle weitergeführten Abgasleitung 5' ist ein NO-Oxidationskatalysator 6 angeordnet. Stromab des HC-Oxidationskatalysators 8 und stromab des NO-Oxidationskatalysators 6 werden die Bypassleitung 7 und die Abgasleitung 5' wieder zu einer Abgasleitung 5" zusammengeführt, in der ein Partikelfilter 3 angeordnet ist.

Ferner umfasst die Regenerationsvorrichtung 1 hier eine Zudosiervorrichtung 9 für Kraftstoff, die, wie dies hier äußerst schematisch dargestellt ist, mit einer Steuer- und Regeleinrichtung 10 gekoppelt ist. Die Zudosiereinrichtung 9 weist eine in die Bypassleitung 7 geführte Einspritzdüse 11 auf, über die der Kraftstoff 12 gesteuert bzw. geregelt mit der Steuer- und Regeleinrichtung 10 zu vorgegebenen Zeiten in vorgegebenen Mengen, bevorzugt periodisch, in die Bypassleitung 7 stromauf des HC-Oxidationskatalysators 8 eingedüst wird.

Wie dies der Fig. 1 weiter entnommen werden kann, ist stromauf des HC-Oxidationskatalysators 8 im Bereich der Bypassleitung 7 ferner eine Drosselklappe 13 angeordnet, die ebenfalls mit einer hier nicht dargestellten Steuer-und/oder Regeleinrichtung gekoppelt sein kann. Je nach der Stellung der Drosselklappe 13 kann die von einem von der Brennkraftmaschine kommenden Abgasstrom 4 in die Bypassleitung 7 abgezweigte Menge und Masse eines zweiten Abgasstroms 14 gesteuert vorgegeben bzw. geregelt werden. In der Fig. 1 ist mit strichlierten Linien die maximale Offenstellung der Drosselklappe 13 und punktiert die Geschlossenstellung der Drosselklappe 13 dargestellt. Der mit 21 bezeichnete Pfeil soll diese Variabilität der Drosselklappe verdeutlichen. Der nach Abzweigung des zweiten Abgasstroms 14 verbleibende erste Abgasstrom 15 durchströmt dann den NO-Oxidationskatalysator, wobei die Stickstoffmonoxide NO des ersten Abgasstroms im NO-Oxidationskatalysator 6 bei relativ niedrigen Temperaturen zu einem großen Teil zu NO₂ aufoxidiert werden, so dass den NO-Oxidationskatalysator 6 ein mit einer großen Menge an NO₂ beladener erster Abgasstrom verlässt. Im ersten Abgasstrom 15 kann ebenfalls eine Drossel- und/oder Absperrvorrichtung vorgesehen werden, um die Abgasmengen über die beiden Teilströme variieren zu können. Diese Vorrichtung ist aus Gründen der Übersichtlichkeit in Fig. 1 allerdings nicht dargestellt.

Der zweite Abgasstrom 14 nimmt entlang seines Strömungsweges stromauf des HC-Oxidationskatalysators 8 den eingedüsten Kraftstoff bzw. die eingedüsten Kohlenwasserstoffe auf und durchströmt kraftstoffangereichert den HC-Oxidationskatalysator 8, in dem dann eine exotherme Reaktion bzw. Oxidation stattfindet, aufgrund der der zweite Abgasstrom 14 auf eine vorgegebene Temperatur erhitzt wird.

Dieser erhitzte zweite Abgasstrom 14 wird dann stromab des NO-Oxidationskatalysators 6 wieder mit dem mit NO₂ beladenen ersten Abgasstrom 15 vermischt wird, so dass anschließend, nach dem Vermischen der beiden Abgasströme 14, 15, ein heißer, mit einem großen Anteil an NO₂ beladener Abgasstrom 16 zum Partikelfilter 3 strömt, wo die im Partikelfilter 3 eingelagerten kohlenstoffhaltigen Rußpartikel zu CO, CO₂, N₂ und NO umgesetzt werden, wodurch der Partikelfilter 3 regeneriert wird. Wie dies in der Fig. 1 lediglich strichliert eingezeichnet ist, kann dem zweiten Abgasstrom 14 eine vorgegebene Menge eines ladeluftseitigen Frischluftstroms 26 zugeführt werden, mit dem während des Regenerationsbetriebes zu vorgegebenen Zeiten die Heizleistung, insbesondere bei Unterschreiten eines vorgegebenen Lambda- oder Sauerstoffwertes, nochmals weiter erhöht werden kann.

Die Fig. 2 zeigt schematisch eine weitere Ausführungsform der erfindungsgemäßen Regenerationsvorrichtung 1, bei der zur Ausführungsform nach Fig. 1 gleiche Bauteile mit den gleichen Bezugszeichen versehen sind und hier zur Vermeidung von unnötigen Wiederholungen nicht mehr explizit näher erläutert sind. Im Unterschied zur Ausführungsform nach Fig. 1 wird hier der zweite Abgasstrom 14 stromauf einer Abgasturbine 17 eines Abgasturboladers 18, der neben der Abgasturbine 17 auch noch in üblicher Weise einen Abgasverdichter 19 aufweist, abgezogen. Dieser stromauf der Abgasturbine 17 vom Abgasstrom 4 abgezogene zweite Abgasstrom 14 strömt dann analog zur Ausgestaltung nach Fig. 1 über eine Drosselklappe 13 und eine Kraftstoff 12 einspritzende Einspritzdüse 11 zum HC-Oxidationskatalysator 8, wo wiederum die exotherme Reaktion bzw. Oxidation stattfindet, das heißt ein erhitzter zweiter Abgasstrom 14 zur Verfügung gestellt wird.

Die Drosselklappe kann auch stromab der Zuführung der Kohlenwasserstoffe angeordnet sein. Dies ist beispielhaft in Fig. 2 dargestellt, in der eine weitere Drosselklappe 20 stromab des HC-Oxidationskatalysators 8 im Bereich der Einmündung der Bypassleitung 7 in die Abgasleitung 5 angeordnet ist. Diese kann zusätzlich zur Drosselklappe 13, aber auch ohne diese (hier nicht dargestellt) verbaut sein. Die hier dargestellte Drosselklappe 20 wirkt mit der Drosselklappe 13 zusammen, die sich je nach vorgegebener Parameter gegenseitig ergänzen können und zum Beispiel eine an sich bekannte Waste-Gate-Funktion zur Verfügung stellen können, um den Turbolader und/oder den Motor vor Beschädigungen zu schützen.

Stromab der Abgasturbine 17 strömt der verbleibende erste Abgasstrom 15 analog zur zuvor beschriebenen Art und Weise durch den NO-Oxidationskatalysator 6, wo das NO zu NO₂ aufoxidiert wird, so dass anschließend stromab des NO-Oxidationskatalysators 6 bzw. stromab des HC-Oxidationskatalysators 8 der mit NO₂ beladene erste Abgasstrom 15 mit dem heißen zweiten Abgasstrom 14 vermischt werden kann und ein heißer, mit NO₂ beladener Abgasstrom 16 zum Partikelfilter 3 geführt werden kann. Die Funktionsweise und Wirkung der Regenerationsvorrichtung 1 der Fig. 2 entspricht hier derjenigen, wie sie in Verbindung mit der Fig. 1 bereits ausführlich erläutert und dargelegt worden ist. Insofern wird auf die zuvor gemachten Ausführungen verwiesen.

Lediglich beispielhaft und schematisch ist hier in der Ausgestaltung nach Fig. 2 dem Partikelfilter 3 noch ein zum Beispiel durch einen NOx-Speicherkatalysa-tor oder einen SCR-Katalysator gebildeter NOx-Reduktionskatalysator 22 nachgeschaltet, mittels dem eine NOx-Reduktion des dem Partikelfilter 3 verlassenden Abgasstroms 23 möglich ist.

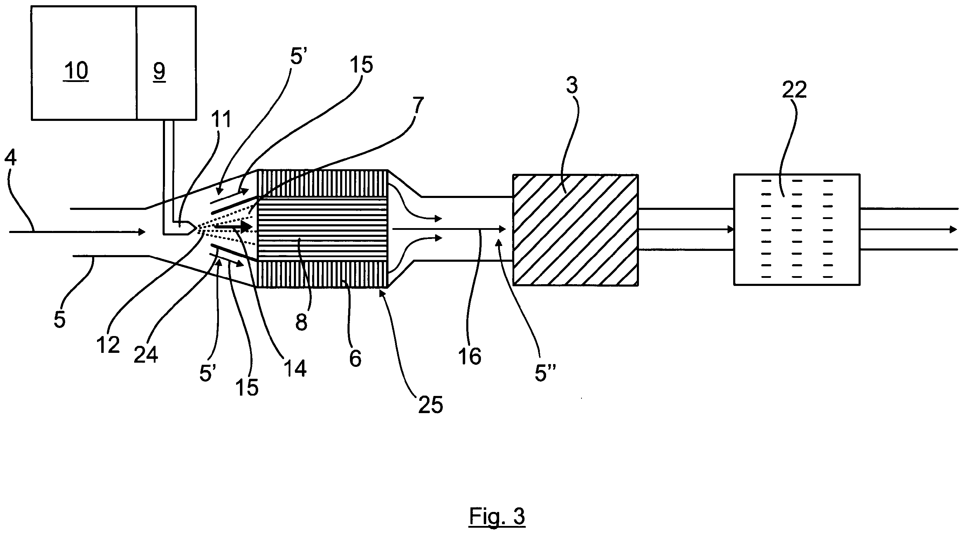

In der Fig. 3 ist schematisch und beispielhaft eine dritte Ausführungsform einer erfindungsgemäßen Regenerationsvorrichtung 1 gezeigt, bei der für eine besonders kompakte und damit platzsparende Bauweise der HC-Oxidationskatalysator 8 innerhalb eines den HC-Oxidationskatalysator 8 ringförmig umschließenden NO-Oxidationskatalysators 6 angeordnet und aufgenommen ist. Der über die Abgasleitung 5 in Richtung zu den beiden Katalysatoren 6, 8 strömende Abgasstrom 4 wird hier durch ein oder mehrere Strömungsleitelemente 24 in einen lediglich den NO-Oxidationskatalysator 6 durchströmenden ersten Abgasstrom 15 sowie in einen lediglich den HC-Oxidationskatalysator 8 durchströmenden zweiten Abgasstrom 14 aufgeteilt. Die Masse des durch den HC-Oxidationskatalysator 8 strömenden zweiten Abgasstroms 14 wird dabei durch die Geometrie der Strömungsleitelemente 24 und/oder durch mit diesen integral ausgebildeten oder zusätzlich zu diesen vorgesehenen Drossel- und/oder Absperrelementen, die hier nicht dargestellt sind, vorgegeben. So kann beispielsweise die Zuströmöffnung zu dem HC-Oxidationskatalysator 8 mittels einer Klappe oder einem Ventil als Sperrelement verschlossen oder mehr oder weniger freigegeben werden, wobei die Ansteuerung der Klappe bzw. des Ventils über eine elektronische Steuer-und/oder Regeleinrichtung erfolgen kann, und zwar in Abhängigkeit von vorgegebenen Betriebsparametern, analog zur zuvor in Verbindung mit den Ausgestaltungen der Figuren 1 und 2 geschilderten Ansteuerung der Drosselklappen 13 bzw. 20.

Unmittelbar vor einem Mündungsbereich der Strömungsleitelemente 24 ist hier wiederum eine Einspritzdüse 11 einer Zudosiereinrichtung 9 angeordnet, mittels der Kraftstoff 12 in den zweiten Abgasstrom 14 eingedüst werden kann, so dass im HC-Oxidationskatalysator 8 eine exotherme Reaktion stattfindet und ein den HC-Oxidationskatalysator 8 verlassender heißer Abgasstrom zusammen mit dem den NO-Oxidationskatalysator 6 durchströmenden ersten Abgasstrom 15 zu einem heißen, mit NO₂ beladenen Abgasstrom 16 vermischt wird. Dieser heiße, mit NO₂ beladen Abgasstrom 16 strömt dann durch den Partikelfilter 3 sowie anschließend durch einen NOₓ-Reduktionskatalysator 22, wie dies bereits zuvor in Verbindung mit der Fig. 2 beschrieben worden ist. Die durch die Strömungsleitelemente 24 ausgebildeten Strömungsbereiche bilden hier dann analog zu den Ausgestaltungen nach den Figuren 1 und 2 wiederum von der Abgasleitung 5 abzweigende Zweigleitungen 5'und 7 aus, die dann im Bereich stromab des NO-Oxidationskatalysators 6 und stromab des HC-Oxidationskatalysators 8 wieder zu einer gemeinsamen Abgasleitung 5" zusammengeführt werden.

Wie dies der schematischen Darstellung der Fig. 3 weiter entnommen werden kann, sind der NO-Oxidationskatalysator 6 und der HC-Oxidationskatalysator 8 hier bevorzugt in einem gemeinsamen Gehäuse 25 angeordnet.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen. Den beschriebenen Ausführungsformen kommt somit nur Beispielcharakter zu.

## Patentansprüche

1. Verfahren zur Regeneration eines im Abgastrakt einer Brennkraftmaschine angeordneten Partikelfilters mit wenigstens einem stromauf des Partikelfilters (3) angeordneten NO-Oxidationskatalysator (6) zur Oxidation von NO, insbesondere zu NO₂, der von einem Abgasstrom (15) durchströmt wird, wobei wenigstens eine stromauf des Partikelfilters (3) angeordnete, von einem weiteren Gasstrom (14) durchströmte Heizeinrichtung (8), insbesondere ein Heizkatalysator, vorgesehen ist, mittels der der weitere Gasstrom (14) erhitzt wird, wobei der erhitzte weitere Gasstrom (14) stromauf des Partikelfilters (3) mit dem vom NO-Oxidationskatalysator (6) kommenden, insbesondere mit NO₂ beladenen, Abgasstrom (15) vermischt wird, **dadurch gekennzeichnet,**
**dass** ein den weiteren Gasstrom bildender zweiter Abgasstrom (14) stromauf des NO-Oxidationskatalysators (6) und stromauf der Heizeinrichtung (8) von einem zum NO-Oxidationskatalysator (6) geführten Abgasstrom (4) abgezweigt wird dergestalt, dass ein erster Abgasstrom (15) den NO-Oxidationskatalysator (6) und ein zweiter Abgasstrom (14) die Heizeinrichtung (8) durchströmt und beide Abgasströme (14, 15) stromab des NO-Oxidationskatalysators (6) und der Heizeinrichtung (8) wieder zusammengeführt und zum Partikelfilter (3) geführt werden, und
**dass** dem zweiten Abgasstrom Kohlenwasserstoffe (12), insbesondere ein Kraftstoff, mittels einer Zudosiervorrichtung (9) zu vorgegebenen Zeiten in vorgegebener Menge, insbesondere periodisch, zudosiert und oxidiert werden.

2. Verfahren nach Anspruch 1, **dadurch gekennzeichnet, dass** der weitere Gasstrom (14) zudem von einem ladeluftseitigen Frischluftstrom und/oder von einem stromab der Einmündung einer Abgasrückführleitung in eine Ladeluftleitung vorhandenem Ladeluftstrom abgezweigt wird.

3. Verfahren nach Anspruch 1 oder 2, **dadurch gekennzeichnet, dass** die Kohlenwasserstoffe (12) in dem weiteren Gasstrom (14) stromauf einer als Oxidationskatalysator ausgebildeten Heizeinrichtung (8) zudosiert werden.

4. Verfahren nach Anspruch 3, **dadurch gekennzeichnet, dass** dem zweiten Abgasstrom (14) stromauf der als Oxidationskatalysator ausgebildeten Heizeinrichtung (8) zu vorgegebenen Zeiten und/oder bei Überschreiten einer vorgegebenen Abgastemperatur und/oder bei Unterschreiten eines vorgegebenen Lambdawerts und/oder bei Unterschreiten eines vorgegebenen Sauerstoffwerts eine vorgegebene Menge eines ladeluftseitigen Frischluftstroms (26) und/oder eine vorgegebene Menge eines stromab der Einmündung einer Abgasrückführleitung in eine Ladeluftleitung abgezweigten Ladeluftstroms zugeführt wird.

5. Verfahren nach einem der vorhergehenden Ansprüche, **dadurch gekennzeichnet, dass** die Abgasmasse des ersten Abgasstroms (15) größer ist als diejenige des zweiten Abgasstroms (14), wobei bevorzugt vorgesehen ist, dass die Abgasmasse des ersten und zweiten Abgasstroms (14, 15) mittels mindestens einer, mit einer Steuer-und/oder Regeleinrichtung ansteuerbaren Drossel- und/oder Absperrvorrichtung (13, 20) gesteuert vorgegeben oder eingeregelt wird.

6. Verfahren nach einem der vorhergehenden Ansprüche, **dadurch gekennzeichnet, dass** der zweite Abgasstrom (14) stromauf mindestens eines Abgasturboladers (18) entnommen wird.

7. Verfahren nach Anspruch 5 und 6, **dadurch gekennzeichnet, dass** wenigstens eine Drossel- und/oder Absperrvorrichtung (13, 20), die im Bereich einer den zweiten Abgasstrom (14) führenden Abgasleitung (7) angeordnet ist, als Waste-Gate fungiert.

8. Vorrichtung zur Regeneration eines im Abgastrakt einer Brennkraftmaschine angeordneten Partikelfilters mit wenigstens einem stromauf des Partikelfilters angeordneten, von einem Abgasstrom durchströmten NO-Oxidationskatalysator zur Oxidation von NO wobei wenigstens eine stromauf des Partikelfilters (3) angeordnete, von einem weiteren Gasstrom (14) durchströmte Heizeinrichtung (8), insbesondere ein Heizkatalysator, vorgesehen ist dergestalt, dass der weitere Gasstrom und der Abgasstrom (15) stromab des NO-Oxidationskatalysators (6) und der Heizeinrichtung (8) dem Partikelfilter (3) im vermischten Zustand zuführbar sind, **dadurch gekennzeichnet,**
**dass** sich die zum NO-Oxidationskatalysator (6) und zur Heizeinrichtung (8) hinführende Abgasleitung (5) in eine vom ersten Abgasstrom (15) durchströmte erste Zweigleitung (5') in der der NO-Oxidationskatalysator (6) angeordnet ist, und in eine vom zweiten Abgasstrom (14) durchströmte zweite Zweigleitung (7) aufteilt, in der die Heizeinrichtung (8) parallel geschaltet zum NO-Oxidationskatalysator (6) angeordnet ist, und dass die beiden Zweigleitungen (5', 7) stromab des NO-Oxidationskatalysators (6) und der Heizeinrichtung (8) wieder zu einer zum Partikelfilter (3) führenden Abgasleitung (5") zusammengeführt sind, dass die Heizeinrichtung (8) durch einen Heizkatalysator gebildet ist, und dass eine Zudosiervorrichtung (9) vorgesehen ist, mittels der dem zweiten Abgasstrom (14) stromauf des Heizkatalysators (8) Kohlenwasserstoffe (12), insbesondere ein Kraftstoff, zudosierbar ist.

9. Vorrichtung nach Anspruch 8, **dadurch gekennzeichnet, dass** der weitere Gasstrom (14) zusätzlich ein ladeluftseitiger Frischluftstrom und/oder ein stromab einer Einmündung einer Abgasrückführleitung in eine Ladeluftleitung abgezweigter Ladeluftstrom ist.

10. Vorrichtung nach Anspruch 8 oder 9, **dadurch gekennzeichnet, dass** die zweite Zweigleitung (7) als Bypassleitung ausgeführt ist, die von der gleichzeitig die erste Zweigleitung (5') ausbildenden und zum NO-Oxidationskatalysator (6) hinführenden Abgasleitung (5) abgezweigt ist.

11. Vorrichtung nach einem der Ansprüche 8 bis 10, **dadurch gekennzeichnet, dass** der Heizkatalysator (8) als Oxidationskatalysator, bevorzugt als HC-Oxidationskatalysator ausgeführt ist.

12. Vorrichtung nach einem der Ansprüche 8 bis 11, **dadurch gekennzeichnet, dass** die den zweiten Abgasstrom (14) führende Abgasleitung (7) mit einer mittels eines Absperrorgans absperrbaren Frischluftleitung strömungstechnisch gekoppelt ist, mit der der den zweiten Abgasstrom (14) führenden Abgasleitung (7) ein ladeluftseitiger Frischluftstrom und/oder ein stromab der Einmündung einer Abgasrückführleitung in eine Ladeluftleitung abgezweigter Ladeluftstrom zuführbar ist.

13. Vorrichtung nach einem der Ansprüche 8 bis 12, **dadurch gekennzeichnet, dass** die bevorzugt als Heizkatalysator ausgebildete wenigstens eine Heizeinrichtung (8) so im Abgastrakt (2) angeordnet ist, dass dieser von wenigstens einem Abgasstrom des Abgastraktes (2) bereichsweise umströmt ist.

14. Vorrichtung nach einem der Ansprüche 8 bis 13, **dadurch gekennzeichnet, dass** der wenigstens eine NO-Oxidationskatalysator (6) die bevorzugt als Heizkatalysator ausgebildete Heizeinrichtung (8) wenigstens bereichsweise umschließt oder umgibt, wobei diese strömungstechnisch entkoppelt vom jeweiligen Abgas- bzw. Gasstrom (14, 15) durchströmt sind, wobei bevorzugt vorgesehen ist, dass der wenigstens eine NO-Oxidationskatalysator (6) und die wenigstens eine Heizeinrichtung (8), insbesondere der wenigstens eine Heizkatalysator (8), in einem gemeinsamen Gehäuse untergebracht sind.

15. Vorrichtung nach einem der Ansprüche 8 bis 14, **dadurch gekennzeichnet, dass** zur Regulierung der Masse des ersten und zweiten Abgasstroms (14, 15) mechanische, die Strömung beeinflussende Mittel und/oder eine Steuer- und/oder Regeleinrichtung vorgesehen ist bzw. sind, die wenigstens eine entsprechend vorgebbarer Mengen- und/oder Massenstromparameter ansteuerbare Drossel- und/oder Absperrvorrichtung (13, 20), insbesondere eine Drossel- und/oder Absperrklappe oder ein Drossel- und/oder Absperrventil, ansteuert, wobei bevorzugt vorgesehen ist, dass wenigstens eine Drossel- und/oder Absperrvorrichtung (13, 20) in der ersten und/oder zweiten Zweigleitung (5', 7) angeordnet ist.

16. Vorrichtung nach einem der Ansprüche 8 bis 15, **dadurch gekennzeichnet, dass** der zweite Abgasstrom (14) stromauf einer Abgasturbine (17) eines Abgasturboladers (18) abgezweigt ist.

17. Vorrichtung nach einem der Ansprüche 8 bis 16, **dadurch gekennzeichnet, dass** wenigstens eine im Bereich der den zweiten Abgasstrom (14) führenden Abgasleitung (7) angeordnete Drossel- und/oder Absperrvorrichtung (13, 20) als Waste-Gate ausgebildet ist.

## Claims

1. Method for regenerating a particle filter arranged in the exhaust tract of an internal combustion engine by means of at least one NO oxidation catalytic converter (6) which is arranged upstream of the particle filter (3) and which serves for the oxidation of NO, in particular to form NO₂, and which is flowed through by an exhaust-gas flow (15), wherein at least one heating device (8), in particular a heating catalytic converter, is provided which is arranged upstream of the particle filter (3) and which is flowed through by a further gas flow (14) and by means of which the further gas flow (14) is heated, wherein the heated further gas flow (14) is mixed, upstream of the particle filter (3), with the exhaust-gas flow (15) which passes from the NO oxidation catalytic converter (6) and which is in particular laden with NO₂, **characterized**
**in that** a second exhaust-gas flow (14) which forms the further gas flow is branched off, upstream of the NO oxidation catalytic converter (6) and upstream of the heating device (8), from an exhaust-gas flow (4) which is conducted to the NO oxidation catalytic converter (6), in such a way that a first exhaust-gas flow (15) flows through the NO oxidation catalytic converter (6) and a second exhaust-gas flow (14) flows through the heating device (8), and the two exhaust-gas flows (14, 15) are merged again downstream of the NO oxidation catalytic converter (6) and the heating device (8) and are conducted to the particle filter (3), and
**in that** hydrocarbons (12), in particular a fuel, are/is dosed at predefined times and in predefined quantities, in particular periodically, into the second exhaust-gas flow and are/is oxidized.

2. Method according to Claim 1, **characterized in that** the further gas flow (14) is furthermore branched off from a charge-air-side fresh-air flow and/or from a charge-air flow present downstream of the opening-in point of an exhaust-gas recirculation line into a charge-air line.

3. Method according to Claim 1 or 2, **characterized in that** the hydrocarbons (12) are dosed into the further gas flow (14) upstream of a heating device (8) in the form of an oxidation catalytic converter.

4. Method according to Claim 3, **characterized in that** a predefined quantity of a charge-air-side fresh-air flow (26) and/or a predefined quantity of a charge-air flow branched off downstream of the opening-in point of an exhaust-gas recirculation line into a charge-air line is fed to the second exhaust-gas flow (14) upstream of the heating device (8) formed as an oxidation catalytic converter at predefined times and/or in the event of an exceedance of a predefined exhaust-gas temperature and/or in the event of an undershooting of a predefined lambda value and/or in the event of an undershooting of a predefined oxygen value.

5. Method according to one of the preceding claims, **characterized in that** the exhaust-gas mass of the first exhaust-gas flow (15) is greater than that of the second exhaust-gas flow (14), wherein it is preferably provided that the exhaust-gas mass of the first and second exhaust-gas flows (14, 15) is predefined with open-loop control or is adjusted with closed-loop control by means of at least one throttle and/or shut-off device (13, 20) which can be actuated by means of an open-loop and/or closed-loop control device.

6. Method according to one of the preceding claims, **characterized in that** the second exhaust-gas flow (14) is extracted upstream of at least one exhaust-gas turbocharger (18).

7. Method according to Claim 5 and 6, **characterized in that** at least one throttle and/or shut-off device (13, 20) which is arranged in the region of an exhaust line (7) conducting the second exhaust-gas flow (14) functions as a wastegate.

8. Device for regenerating a particle filter arranged in the exhaust tract of an internal combustion engine, having at least one NO oxidation catalytic converter which is arranged upstream of the particle filter and which is flowed through by an exhaust-gas flow and which serves for the oxidation of NO, wherein at least one heating device (8), in particular a heating catalytic converter, which is arranged upstream of the particle filter (3) and which is flowed through by a further gas flow (14), is provided such that the further gas flow and the exhaust-gas flow (15) can, downstream of the NO oxidation catalytic converter (6) and the heating device (8), be fed in the mixed state to the particle filter (3), **characterized**
**in that** the exhaust line (5) which leads to the NO oxidation catalytic converter (6) and to the heating device (8) splits into a first branch line (5'), which is flowed through by the first exhaust-gas flow (15) and in which the NO oxidation catalytic converter (6) is arranged, and a second branch line (7), which is flowed through by the second exhaust-gas flow (14) and in which the heating device (8) is arranged so as to be connected in parallel with respect to the NO oxidation catalytic converter (6), and in that the two branch lines (5', 7) are merged again downstream of the NO oxidation catalytic converter (6) and the heating device (8) so as to form an exhaust line (5") which leads to the particle filter (3),
**in that** the heating device (8) is formed by a heating catalytic converter, and in that a dosing device (9) is provided by means of which hydrocarbons (12), in particular a fuel, can be dosed into the second exhaust-gas flow (14) upstream of the heating catalytic converter (8).

9. Device according to Claim 8, **characterized in that** the further gas flow (14) is additionally a charge-air-side fresh-air flow and/or a charge-air flow which is branched off downstream of an opening-in point of an exhaust-gas recirculation line into a charge-air line.

10. Device according to Claim 8 or 9, **characterized in that** the second branch line (7) is designed as a bypass line, which bypass line is branched off from the exhaust line (5) which simultaneously forms the first branch line (5') and which leads to the NO oxidation catalytic converter (6).

11. Device according to one of Claims 8 to 10, **characterized in that** the heating catalytic converter (8) is formed as an oxidation catalytic converter, preferably as an HC oxidation catalytic converter.

12. Device according to one of Claims 8 to 11, **characterized in that** the exhaust line (7) which conducts the second exhaust-gas flow (14) is coupled in terms of flow to a fresh-air line which can be shut off by means of a shut-off element and by means of which a charge-air-side fresh-air flow and/or a charge-air flow branched off downstream of the opening-in point of an exhaust-gas recirculation line into a charge-air line can be fed to the exhaust line (7) which conducts the second exhaust-gas flow (14).

13. Device according to one of Claims 8 to 12, **characterized in that** the at least one heating device (8), which is preferably formed as a heating catalytic converter, is arranged in the exhaust tract (4) so as to be regionally flowed around by at least one exhaust-gas flow of the exhaust tract (2).

14. Device according to one of Claims 8 to 13, **characterized in that** the at least one NO oxidation catalytic converter (6) at least regionally encloses or surrounds the heating device (8) which is preferably formed as a heating catalytic converter, wherein said NO catalytic converter and heating device are preferably flowed through by the respective exhaust-gas flow and gas flow (14, 15) in a decoupled manner in terms of flow, wherein it is preferably provided that the at least one NO oxidation catalytic converter (6) and the at least one heating device (8), in particular the at least one heating catalytic converter (8), are accommodated in a common housing.

15. Device according to one of Claims 8 to 14, **characterized in that** mechanical flow-influencing means and/or an open-loop and/or closed-loop control device are/is provided for the closed-loop control of the mass of the first and second exhaust-gas flows (14, 15), which open-loop and/or closed-loop control device actuates at least one throttle and/or shut-off device (13, 20), in particular a throttle and/or shut-off flap or a throttle and/or shut-off valve, which can be actuated in accordance with predefinable quantity and/or mass flow parameters, wherein it is preferably provided that at least one throttle and/or shut-off device (13, 20) is arranged in the first and/or second branch line (5', 7).

16. Device according to one of Claims 8 to 15, **characterized in that** the second exhaust-gas flow (14) is branched off upstream of an exhaust-gas turbine (17) of an exhaust-gas turbocharger (18).

17. Device according to one of Claims 8 to 16, **characterized in that** at least one throttle and/or shut-off device (13, 20) arranged in the region of the exhaust line (7) conducting the second exhaust-gas flow (14) is formed as a wastegate.

## Revendications

1. Procédé de régénération d'un filtre à particules disposé dans la ligne de gaz d'échappement d'un moteur à combustion interne avec au moins un catalyseur d'oxydation de NO (6) disposé en amont du filtre à particules (3) pour l'oxydation de NO, en particulier en NO₂, qui est balayé par un flux de gaz d'échappement (15), au moins un dispositif de chauffage (8), en particulier un catalyseur chauffé, disposé en amont du filtre à particules (3), balayé par un autre flux de gaz (14), étant prévu, au moyen duquel l'autre flux de gaz (14) est chauffé, l'autre flux de gaz (14) chauffé étant, en amont du filtre à particules (3), mélangé avec le flux de gaz d'échappement (15), en particulier chargé de NO₂, en provenance du catalyseur d'oxydation de NO (6), **caractérisé en ce que**,
en amont du catalyseur d'oxydation de NO (6) et en amont du dispositif de chauffage (8), un deuxième flux de gaz (14) formant l'autre flux de gaz est dérivé à partir d'un flux de gaz d'échappement (4) conduit au catalyseur d'oxydation de NO (6) de telle sorte qu'un premier flux de gaz d'échappement (15) balaye le catalyseur d'oxydation de NO (6) et un deuxième flux de gaz d'échappement (14) balaye le dispositif de chauffage (8) et, en aval du catalyseur d'oxydation de NO (6) et du dispositif de chauffage (8), les deux flux de gaz d'échappement (14, 15) sont de nouveau réunis et conduits au filtre à particules (3), et
des hydrocarbures (12), en particulier un carburant, sont au moyen d'un dispositif de dosage (9), à des moments spécifiés, en quantité spécifiée, en particulier périodiquement, ajoutés et oxydés.

2. Procédé selon la revendication 1, **caractérisé en ce que** l'autre flux de gaz (14) est dérivé en outre à partir d'un flux d'air frais côté air de charge et/ou d'un flux d'air de charge présent en aval de l'embouchure d'une conduite de retour des gaz d'échappement dans une conduite d'air de charge.

3. Procédé selon la revendication 1 ou 2, **caractérisé en ce que** les hydrocarbures (12) dans l'autre flux de gaz (14) sont ajoutés en amont d'un dispositif de chauffage (8) constitué en tant que catalyseur d'oxydation.

4. Procédé selon la revendication 3, **caractérisé en ce qu'**une quantité spécifiée d'un flux d'air frais (26) côté air de charge et/ou une quantité spécifiée d'un flux d'air de charge dérivé dans une conduite d'air de charge en aval de l'embouchure d'une conduite de retour des gaz d'échappement est conduite au deuxième flux de gaz d'échappement (14) en amont du dispositif de chauffage (8) constitué en tant que catalyseur d'oxydation à des moments spécifiés et/ou en cas de passage au-dessus d'une température spécifiée des gaz d'échappement et/ou en cas de passage au-dessous d'une valeur lambda spécifiée et/ou en cas de passage au-dessous d'une valeur d'oxygène spécifiée.

5. Procédé selon l'une des revendications précédentes, **caractérisé en ce que** la masse des gaz d'échappement du premier flux de gaz d'échappement (15) est plus grande que celle du deuxième flux de gaz d'échappement (14), étant de préférence prévu que la masse de gaz d'échappement du premier et du deuxième flux de gaz d'échappement (14, 15) est spécifiée ou régulée de façon commandée au moyen d'au moins un dispositif d'étranglement et/ou de blocage (13, 20) pouvant être piloté avec un système de commande et/ou de régulation.

6. Procédé selon l'une des revendications précédentes, **caractérisé en ce que** le deuxième flux de gaz d'échappement (14) est prélevé en amont d'au moins d'un turbocompresseur à gaz d'échappement (18).

7. Procédé selon la revendication 5 ou 6, **caractérisé en ce qu'**au moins un dispositif d'étranglement et/ou de blocage (13, 20) qui est disposé dans la zone d'une conduite de gaz d'échappement (7) conduisant le deuxième flux de gaz d'échappement (14) fonctionne en tant que limiteur de pression de suralimentation.

8. Dispositif de régénération d'un filtre à particules disposé dans la ligne de gaz d'échappement d'un moteur à combustion interne avec au moins un catalyseur d'oxydation de NO, disposé en amont du filtre à particules, balayé par un flux de gaz d'échappement pour l'oxydation de NO, au moins un dispositif de chauffage (8), en particulier un catalyseur chauffé, disposé en amont du filtre à particules (3), balayé par un autre flux de gaz (14) étant prévu de telle sorte que l'autre flux de gaz et le flux de gaz d'échappement (15), dans l'état mélangé, peuvent être conduits au filtre à particules (3) en aval du catalyseur d'oxydation de NO (6) et du dispositif de chauffage (8), **caractérisé en ce que**
la conduite de gaz d'échappement (5) conduisant au catalyseur d'oxydation de NO (6) et au dispositif de chauffage (8) se divise en une première conduite de dérivation (5'), balayée par le premier flux de gaz d'échappement (15), dans laquelle le catalyseur d'oxydation de NO (6) est disposé, et en une deuxième conduite de dérivation (7), balayée par le deuxième flux de gaz d'échappement (14), dans laquelle le dispositif de chauffage (8) est disposé en étant monté parallèlement au catalyseur d'oxydation de NO (6), et **en ce que** les deux conduites de dérivation (5', 7) sont réunies en aval du catalyseur d'oxydation de NO (6) et du dispositif de chauffage (8) pour former de nouveau une conduite de gaz d'échappement (5") conduisant au filtre à particules (3),
**en ce que** le dispositif de chauffage (8) est formé d'un catalyseur de chauffage, et **en ce qu'**il est prévu un dispositif de dosage (9) au moyen duquel des hydrocarbures (12), en particulier un carburant, peuvent être ajoutés au deuxième flux de gaz d'échappement (14) en amont du catalyseur de chauffage (8).

9. Dispositif selon la revendication 8, **caractérisé en ce que** l'autre flux de gaz (14) est en plus un flux d'air frais côté air de charge et/ou un flux d'air de charge dérivé en aval d'une embouchure d'une conduite de retour des gaz d'échappement dans une conduite d'air de charge.

10. Procédé selon la revendication 8 ou 9, **caractérisé en ce que** la deuxième conduite de dérivation (7) est réalisée en tant que conduite de bypass qui est dérivée de la conduite de gaz d'échappement (5) qui simultanément constitue la première conduite de dérivation (5') et conduit au catalyseur d'oxydation de NO (6).

11. Dispositif selon l'une des revendications 8 à 10, **caractérisé en ce que** le catalyseur de chauffage (8) est réalisé en tant que catalyseur d'oxydation, de préférence en tant que catalyseur d'oxydation HC.

12. Dispositif selon l'une des revendications 8 à 11, **caractérisé en ce que** la conduite de gaz d'échappement (7) conduisant le deuxième flux de gaz d'échappement (14) est couplée fluidiquement à une conduite d'air frais, pouvant être bloquée au moyen d'un organe de commande, avec laquelle un flux d'air frais côté air de charge et/ou un flux d'air de charge dérivé en aval de l'embouchure d'une conduite de retour de gaz d'échappement dans une conduite d'air de charge peut être conduit à la conduite de gaz d'échappement (7) conduisant le deuxième flux de gaz d'échappement (14).

13. Dispositif selon l'une des revendications 8 à 12, **caractérisé en ce que** le dispositif de chauffage (8) au moins au nombre de un constitué de préférence en tant que catalyseur de chauffage est disposé dans la ligne de gaz d'échappement (2) de telle sorte que celle-ci est entourée par zones par au moins un flux de gaz d'échappement de la ligne de gaz d'échappement (2).

14. Dispositif selon l'une des revendications 8 à 13, **caractérisé en ce que** le catalyseur d'oxydation de NO (6) au moins au nombre de un cerne ou entoure au moins par zones le dispositif de chauffage (8) constitué de préférence en tant que catalyseur de chauffage, ceux-ci étant balayés fluidiquement en étant découplés du flux de gaz d'échappement ou respectivement de gaz (14, 15) respectif, étant de préférence prévu que le catalyseur d'oxydation de NO (6) au moins au nombre de un et le dispositif de chauffage (8) au moins au nombre de un, en particulier le catalyseur de chauffage (8) au moins au nombre de un, sont logés dans un boîtier commun.

15. Dispositif selon l'une des revendications 8 à 14, **caractérisé en ce que**, pour la régulation de la masse du premier et du deuxième flux de gaz d'échappement (14, 15), il est prévu des moyens mécaniques influençant l'écoulement et/ou un dispositif de commande et/ou de régulation qui pilote au moins un dispositif d'étranglement et/ou de blocage (13, 20) pouvant être piloté conformément à des paramètres de quantité et/ou de flux massique pouvant être spécifiés, en particulier un clapet d'étranglement et/ou de blocage ou une soupape d'étranglement et/ou de blocage, étant de préférence prévu qu'au moins un dispositif d'étranglement et/ou de blocage (13, 20) est disposé dans la première et/ou la deuxième conduite de dérivation (5', 7).

16. Dispositif selon l'une des revendications 8 à 15, **caractérisé en ce que** le deuxième flux de gaz (14) est dérivé en amont d'une turbine à gaz d'échappement (17) d'un turbocompresseur à gaz d'échappement (18).

17. Dispositif selon l'une des revendications 8 à 16, **caractérisé en ce qu'**au moins un dispositif d'étranglement et/ou de blocage (13, 20) disposé dans la zone de la conduite de gaz d'échappement (7) conduisant le deuxième flux de gaz (14) est constitué en tant que limiteur de pression de suralimentation.
